Europäisches Patentamt

European Patent Office

Office européen des brevets

(11) Publication number : **0 570 324 A1**

(12) **EUROPEAN PATENT APPLICATION**

(21) Application number : **93610028.8**

(22) Date of filing : **30.04.93**

(51) Int. Cl.⁵ : **C01B 17/765**

(30) Priority : **12.05.92 DK 618/92**

(43) Date of publication of application :
**18.11.93 Bulletin 93/46**

(84) Designated Contracting States :
**DE DK FR GB IT NL**

(71) Applicant : **Haldor Topsoe A/S**
**Nymollevej 55**
**DK-2800 Lyngby (DK)**

(72) Inventor : **Jensen-Holm, Hans**
**Sondervej 66**
**DK-2830 Virum (DK)**

(54) **Process for the production of sulphuric acid.**

(57)    Process for the preparation of sulphuric acid
from a sulphur dioxide containing feed gas,
comprising the steps of
      catalytic oxidation of sulphur dioxide in
the feed gas to sulphur trioxide ; and
      hydration of sulphur trioxide in the
oxidized feed gas to sulphuric acid, which process includes further steps of
      dividing the sulphur dioxide containing
feed gas into a first and second gas portion in a
split ratio of between 1 :4 and 4 :1 ;
      diluting the first gas portion of the feed
gas with a gas to a sulphur dioxide concentration by which no excessive heat is developed
in a subsequent first catalytic oxidation of the
gas portion ;
      subjecting the diluted first gas portion the
first catalytic oxidation ;
      recombining the oxidized first gas portion
with the second portion of the feed gas ; and
      subjecting the recombined gas portions of
the feed gas to a second catalytic oxidation.

EP 0 570 324 A1

The present invention relates to the production of sulphuric acid. Presently, the only commercial process for manufacturing concentrated sulphuric acid is the contact process. In this process an essential step is the catalytic conversion of sulphur dioxide into sulphur trioxide. The supply of sulphur dioxide can be derived from a variety of raw materials. The most common is by burning sulphur in a furnace at around 1000°C. Other sources include roasting of pyrites, the smelting of non-ferrous metal ores and other high-temperature processes, such as burning spent sulphuric acid, which has been used in oil refining. Depending on the process by which $SO_2$ is generated, gas streams containing 6-13% $SO_2$ are usually fed to a catalytic converter.

Conversion of sulphur dioxide to sulphuric acid, proceeds by the following reactions:

$$2SO_2 + O_2 \rightleftarrows 2SO_3 \quad (1)$$
$$SO_3 + H_2O \rightarrow H_2SO_4 \quad (2)$$

The equilibrium conversion reaction (1) of $SO_2$ to $SO_3$ is mainly governed by the temperature.

Because the forward reaction gives off heat and the backward reaction absorbs heat, if heat is removed from the system by lowering the temperature, the backward reaction is discouraged, so the position of equilibirium of reaction (1) shifts towards sulphur trioxide formation. The system requires a substantial amount of heat, before it will react in either direction, and at the temperature needed to obtain a practical conversion rate the equilibrium yield of sulphur trioxide is unsatisfactory. By means of an oxidation catalyst, the rate of reaction is increased by lowering the activation energy of the oxidation reaction, allowing the temperature to be reduced to the point where a desireable conversion rate is obtained. With conventional catalysts in use today, a temperature of about 400°C is needed to initiate a self-sustaining reaction; however, since reaction (1) is exothermic, the temperature within the catalyst mass will raise.

Sulphuric acid reactors are traditionally operated in adiabatic manner.

It is thus obvious that with a required inlet temperature of 400-420°C, the exothermic nature of the $SO_2$-oxidation process fixes a limit to the concentration of $SO_2$ in the feed gas since otherwise the exit temperature may exceed the practical maximum temperature of the catalyst and materials of construction, which is about 640°C. This is normally not a problem for gases arising from burning of sulphur in air or other $SO_2$-generating processes, where air is used as oxygen source since in these cases the concentrations of sulphur dioxide and oxygen will limit the oxidation reaction within an exit temperature of maximum approximately 630°C.

The use of air as oxygen supply, however, has the draw-back that a large amount of inert nitrogen contained in air has to be carried through the acid plant, thereby, increasing the required size of equipment and depreciating the economics of the process.

With the increasing tendency to use oxygen enrichment in e.g. copper smelters and sulphuric acid recovery plants, it has become increasingly interesting to be able to treat process gases with high contents of oxygen as well as of sulphur dioxide.

Treatment of high concentrated sulphur dioxide gas streams represents a serious problem. Due to the high sulphur dioxide concentration, the temperature in the catalyst bed will exceed the maximum allowable range and destroy the catalyst. The gas streams must, therefore, be diluted with large amounts of air or another gas, which is not desirable by the above given reasons.

Installation of cooling tubes in the catalyst bed or loading the catalyst in tubes surrounded by a cooling medium is not a feasible or satisfactory solution, since this greatly complicates the regular process of removing unavoidable deposits of foreign dust in the layers of catalyst particles.

The general object of this invention is to avoid the above drawbacks of the known sulphuric acid preparation processes by reducing the necessary dilution with air during the oxidation of $SO_2$-containing gases and at the same time avoiding the risk of overheating the oxidation catalyst and/or construction materials in the acid plant.

The invention is based on the concept that only part of the process gas is diluted with air or another gas, which has a sulphur dioxide content, which is sufficiently low so that the dilution gas does not in itself require dilution. This diluted part of the gas is then treated in one or more catalyst beds after which the remaining, undiluted gas is added and the mixed gas is converted to the required level across additional catalyst beds. As a result, the overall degree of dilution is lowered and made it is thus possible to treat a gas with an average $SO_2$-concentration, which is higher than it would otherwise have been possible, thereby, allowing reductions in equipment size and improvements in the economics of the plant operation because of the smaller gas volume to be processed.

Accordingly, the invention provides a process for the preparation of sulphuric acid from a sulphur dioxide containing feed gas, comprising the steps of

catalytic oxidation of sulphur dioxide in the feed gas to sulphur trioxide; and

hydration of sulphur trioxide in the oxidized feed gas to sulphuric acid, which process includes further steps of

dividing the sulphur dioxide containing feed gas into a first and second portion in a split ratio of between 1:4 and 4:1;

diluting the first portion of the feed gas with a gas to a sulphur dioxide concentration by which no excessive heat is developed in a subsequent first catalytic oxidation of the gas portion;

subjecting the diluted first gas portion the first catalytic oxidation;

recombining the oxidized first gas portion with the second portion of the feed gas; and

subjecting the recombined gas portion of the feed gas to a second catalytic oxidation.

The invention applies to all cases, where dilution of as $SO_2$-containing gas stream is necessary in order to avoid detrimental temperatures in the acid plant. It will typically be for gases containing more than 12% $SO_2$, but may also apply for lower concentrations under special circumstances, for instance, if the oxygen content is very high or if the catalyst inlet temperature cannot be lowered sufficiently.

The catalytic oxidation of sulphur dioxide in the feed gas may be carried out in contact with any of the known sulphur oxidation catalysts arranged as fixed bed in an adiabatic operated reactor. A preferred catalyst for use in the inventive process is the cesium promoted vanadium pentoxide catalyst, as available from Haldor Tops∅e A/S, Denmark, under the tradename VK58. This catalyst permits the reactors being operated at an inlet temperature of 20-40°C lower than conventional vanadium pentoxide catalyst.

As a general procedure for the calculation, the required dilution of the feed gas, the diluted gas to comply with the following conditions:

$Y_{SO2} \cdot 2900°C \cdot \alpha_{eq} < \Delta T$, where

$Y_{SO2}$ is the molar fraction of $SO_2$ at the inlet of a catalyst bed;

$\alpha_{eq}$ the fractional conversion of $SO_2$ at equilibrium of reaction (1) at the catalyst bed outlet;

$\Delta T$ the allowable temperature rise in the catalyst bed; and

the 2900°C is 100 times the approximate 29°C temperature rise per per cent of $SO_2$ converted to $SO_3$ in the catalyst bed.

The amount of air or gas used for diluting the feed gas will, thus, mainly depend on the concentration of $SO_2$ in the feed gas.

In the operation of the process according to the invention with a feed gas having a high $SO_2$-concentration of up to 80 mole%, e.g. from metal ore roasters, the gas will be divided into a first and second portion in a typical split ratio of 1:1 - 3:1, respectively. The first gas portion thus constituting 50-75% of the total gas stream is then diluted with preferably air in an amount of usually between 2 and 6 mole air per mole $SO_2$ in the gas. The diluted gas portion is passed to a first oxidation step, where a part of the $SO_2$ is oxidized into $SO_3$ by contact with the oxidation catalyst. After $SO_2$-oxidation, the gas portion is recombined with the second portion.

The $SO_2$-concentration in the recombined gas stream is then sufficiently low to be further treated without dilution in a second oxidation step by contact with the oxidation catalyst. The oxidized gas stream is finally passed to a conventional $SO_3$-absorption tower, where $SO_3$ in the oxidized gas stream is hydrated to sulphuric acid.

The above features and advantages of the invention will further be illustrated in the following examples with reference to specific embodiments.

## Example 1

A feed gas stream with 80 mole% $SO_2$ is in a conventional sulphuric acid process diluted with 5.84 mole air per mole feed gas to give a process gas containing 11.7 mole% $SO_2$ and 17.9 mole% $O_2$ with $N_2$ as balance. The air diluted process gas is processed directly in a sulphuric acid plant, in which an oxidation reactor contains a series of fixed beds of a conventional vanadium pentoxide catalyst. The inlet temperature to the catalyst bed is in the range of 400-420°C to ensure an exit temperature below 640°C.

By the process according to the invention, only 74% of the above feed gas stream is diluted by air to give a process gas containing 11.7 mole% $SO_2$ and 17.9 mole% $O_2$ (balance $N_2$). This gas is processed in a first bed of the conventional vanadium pentoxide catalyst. The exit gas from the first catalytic reactor is then recombined with the remaining 26% of the feed gas stream, resulting in a gas stream containing 7.9 mole% $SO_2$, 7.8 mole% $SO_3$ and 13.8 mole% $O_2$ (balance $N_2$). This gas is sufficiently low in $SO_2$-concentration to be further treated in a subsequent bed of the above catalyst, without risk of excessive catalyst bed exit temperatures. As a result, only 4.32 mole air per mole of the original feed gas stream were used for the dilution of the gas stream. Compared to the conventional process by the process according to the invention a reduction of 22% of the total gas volume to be processed in the sulphuric acid plant is obtained.

## Example 2

A feed gas stream with 39.5 mole% $SO_2$ and 4.8 mole% $O_2$ is processed by the conventional sulphuric acid process. The gas stream requires dilution with 1.93 mole air per mole feed gas to achieve a gas containing 13.5 mole% $SO_2$ and 15.5 mole% $O_2$ (balance $N_2$), which can be fed into a catalytic reactor with the aforementioned low temperature VK58 oxidation catalyst.

By use of the inventive process, only 62% of the feed gas stream are diluted with air leaving a diluted gas portion with 13.5 mole% $SO_2$. About 65% of $SO_2$ in the diluted gas portion are converted to $SO_3$ in a first catalyst bed of the VK58 catalyst.

The remaining 38% of the original feed gas stream is, subsequently, added to the converted gas portion resulting in a combined gas stream with 11.2 mole% $SO_2$, 7.5 mole% $SO_3$ and 10.4 mole% $O_2$ (balance $N_2$). This gas stream is then finally converted in a second catalyst bed of the VK58 catalyst without further air dilution.

Compared to the conventional process, the inventive process saves 38% air dilution and reduces, thereby, the total gas volume to be processed in the acid plant by 25%.

**Claims**

1. Process for the preparation of sulphuric acid from a sulphur dioxide containing feed gas, comprising the steps of

catalytic oxidation of sulphur dioxide in the feed gas to sulphur trioxide; and

hydration of sulphur trioxide in the oxidized feed gas to sulphuric acid, which process includes further steps of

dividing the sulphur dioxide containing feed gas into a first and second gas portion in a split ratio of between 1:4 and 4:1;

diluting the first gas portion of the feed gas with a gas to a sulphur dioxide concentration by which no excessive heat is developed in a subsequent first catalytic oxidation of the gas portion;

subjecting the diluted first gas portion the first catalytic oxidation;

recombining the oxidized first gas portion with the second portion of the feed gas; and

subjecting the recombined gas portions of the feed gas to a second catalytic oxidation.

2. The process of claim 1, wherein the feed gas is divided into a first and second gas portion in a split ratio of between 1:1 and 3:1.

3. The process of claim 1, wherein the first gas portion of the feed gas is diluted with air in an amount of between 2 and 6 mole air per mole $SO_2$ in the gas portion.

4. The process of claim 1, wherein the first and second catalytic oxidation is carried out in a series of catalyst beds.

European Patent
Office

**EUROPEAN SEARCH REPORT**

Application Number

EP 93 61 0028

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 218 283 (METALLGESELLSCHAFT) <br> * the whole document * | 1-4 | C01B17/765 |
| A | FR-A-2 308 588 (STAUFFER CHEMICAL) <br> * page 4, line 16 - line 22; claims 1,10; figure * | 1-4 | |
| A | CHEMICAL ABSTRACTS, vol. 82, no. 20, 19 May 1975, Columbus, Ohio, US; abstract no. 127124s, H. KAWASAKI ET AL. 'Sulfuric acid from concentrated sulfur dioxide.' page 117 ; <br> * abstract * <br> & JP-A-49 119 895 (MISSAN ENGINEERING) 15 November 1974 | 1-4 | |
| A | FR-A-2 162 184 (BAYER) | | |
| A | EP-A-0 218 411 (BOC GROUP) | | |
| | ----- | | TECHNICAL FIELDS SEARCHED (Int. Cl.5 ) |
| | | | C01B |

The present search report has been drawn up for all claims

| Place of search | Date of completion of the search | Examiner |
|---|---|---|
| THE HAGUE | 30 AUGUST 1993 | ZALM W.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)